# EUROPÄISCHE PATENTANMELDUNG

(11) **EP 3 659 981 A1**
(43) Veröffentlichungstag der Anmeldung: **03.06.2020**
(21) Anmeldenummer: 19211843.8
(22) Anmeldetag: 27.11.2019
(51) Int. Cl.: C02F 1/44, C02F 5/00

(54) **LEITUNGSANORDNUNG ZUR VORBEHANDLUNG VON TRINKWASSER**

(30) Priorität: 30.11.2018 DE 102018130508
(71) Anmelder: Exergene Technologie GmbH & Co., 22397 Hamburg (DE)
(72) Erfinder: Puls, Norbert, 22589 Hamburg (DE); Wermter, Carsten, 20149 Hamburg (DE)
(74) Vertreter: Cohausz & Florack

(57) **Zusammenfassung**

Die Erfindung betrifft eine Leitungsanordnung zur Vorbehandlung von Trinkwasser, mit einer Einlassleitung (4) und einer Auslassleitung (6), mit einem zwischen der Einlassleitung (4) und der Auslassleitung (6) angeordneten Leitungsabschnitt (8), mit einer Bypassleitung (10), mit einer Ultrafiltrationseinheit (12) und mit einer Pumpe (14), bei dem das technische Problem, die Leitungsanordnung zur Vorbehandlung von Trinkwasser weiter zu verbessern, dadurch gelöst wird, dass ein Kalkschutzbehälter (16) zur Aufnahme von Kalkschutzgranulat vorgesehen ist, dass der Kalkschutzbehälter (16) in Strömungsrichtung vor der Ultrafiltrationseinheit (12) angeordnet ist und dass die Pumpe (14) für ein Erzeugen eines Wasserstroms durch die Ultrafiltrationseinheit (12) und den Kalkschutzbehälter (16) hindurch vorgesehen ist..

## Beschreibung

Die Erfindung betrifft eine Leitungsanordnung zur Vorbehandlung von Trinkwasser, mit einer Einlassleitung und einer Auslassleitung, mit einem zwischen der Einlassleitung und der Auslassleitung angeordneten Leitungsabschnitt, mit einer Bypassleitung, mit einer Ultrafiltrationseinheit und mit einer Pumpe.

Eine zuvor genannte Leitungsanordnung ist aus der EP 2 474 506 B1 bekannt. Zur Vermeidung einer gesundheitsgefährdenden Vermehrung von Mikroorganismen wird eine Ultrafiltrationseinheit eingesetzt, um Mikroorganismen, insbesondere Legionellen. und deren Nahrungsstoffe aus dem Trinkwasser heraus zu filtern. Die Ultrafiltrationseinheit ist dabei in der Bypassleitung angeordnet, so dass zumindest ein Teil des Wassers durch die Ultrafiltrationseinheit strömt und gefiltert und somit säubert wird.

In Wasserversorgungsgebieten mit hoher Wasserhärte und negativer Calcitlösekapazität besteht das bekannte Problem, dass sich Kalk und andere Wasserinhaltstoffe in Leitungen und weiteren Komponenten als Inkrustationen ablagern. Die Inkrustationen führen zu einer erheblichen Vergrößerung der Oberfläche innerhalb der Leitungsanordnung, wodurch die Ansiedelung von Mikroorganismen begünstigt wird und sich die Gefahr einer Besiedelung mit gesundheitsschädlichen Mikroorganismen vergrößert.

Bei stark kalkhaltigem bzw. Kalk abscheidenden Wasser besteht insbesondere die Problematik, dass die Kalkablagerungen auch auf den Filtermembranen des Ultrafiltrationsmoduls auftreten, so dass diese sich irreversibel zusetzen.

Eine bekannte Lösung zur Verringerung der Bildung von Inkrustationen besteht aus einem Ionentauscher, um die Kalkionen aus dem Wasser zu entfernen und gegen andere Ionen auszutauschen.

Bei einem alternativen Ansatz zur Vermeidung der Ablagerungen wird die Struktur des Kalkes so verändert, dass sich der Kalk nicht mehr an den oben genannten Flächen absetzt. Hierbei wird das Wasser durch einen Behälter geleitet, der mit speziellem Granulat gefüllt ist. Der Kalk wird in seiner Struktur verändert, so dass eine sogenannte Stabilisierung des Kalkes erfolgt.

Beide Verfahren zur Reduktion der Inkrustationsbildung verwenden Granulate, die sich in einem Behälter befinden, durch die das Trinkwasser geleitet wird. Granulate wiederum weisen eine sehr große Oberfläche auf, so dass die Gefahr einer Ansiedelung und starken Vermehrung von Mikroorganismen sehr hoch ist. Für einen dauerhaften hygienisch einwandfreien Betrieb einer Entkalkungsanlage ist es daher vorteilhaft bzw. erforderlich, die Vermehrung von Mikroorganismen auf den Granulaten zu verringern oder ganz zu unterbinden.

Daher liegt der vorliegenden Erfindung das technische Problem zugrunde, die eingangs genannte Leitungsanordnung zur Vorbehandlung von Trinkwasser weiter zu verbessern und die genannten Nachteile zumindest teilweise zu beheben.

Das zuvor aufgeführte technische Problem wird erfindungsgemäß bei einer Leitungsanordnung zur Vorbehandlung von Trinkwasser dadurch gelöst, dass ein Kalkschutzbehälter zur Aufnahme von Kalkschutzgranulat vorgesehen ist, dass der Kalkschutzbehälter in Strömungsrichtung vor der Ultrafiltrationseinheit angeordnet ist und dass die Pumpe für ein Erzeugen eines Wasserstroms durch die Ultrafiltrationseinheit und den Kalkschutzbehälter hindurch vorgesehen ist.

Somit wird das zu behandelnde Wasser, das aus einer Einspeisestelle durch die Einlassleitung in einen Wasser führenden Leitungsbereich einer Trinkwasserinstallation jenseits der Auslassleitung fließen soll, durch einen Rohrleitungsabschnitt zwischen der Einlassleitung und der Auslassleitung und durch die Bypassleitung geleitet, indem die Pumpe einen Wasserfluss durch den Kalkschutzbehälter und durch eine Ultrafiltrationseinheit erzeugt. Dabei sind die Komponenten zur Kalkentfernung bzw. Kalkstabilisierung und die Ultrafiltrationseinheit so angeordnet, dass sich die positiven Effekte der Komponenten gegenseitig unterstützen und ergänzen, so dass die Hygiene des Wassers dauerhaft erhalten wird und Kalkablagerungen vermieden bzw. reduziert werden.

Das Wasser kann daher durch den Betrieb der Pumpe kontinuierlich oder zeitweise durch die Ultrafiltrationseinheit gereinigt und der im Wasser enthaltene Kalk kann entfernt oder stabilisiert werden, so dass eine Keimvermehrung in allen Anlagenteilen wie Kalkschutzbehälter und Ultrafiltrationseinheit dauerhaft vermieden wird.

Insbesondere in Zeiten geringer oder keiner Wasserentnahme aus der Auslassleitung sorgt die Pumpe für einen ausreichend stark zirkulierenden Volumenstrom durch die Ultrafiltrationseinheit und den Kalkschutzbehälter, um eine retrograde Besiedelung der Filterfläche und des Kalkschutzgranulates dauerhaft zu verhindern.

Denn das Wasser, das durch die Ultrafiltrationseinheit fließt, hat einerseits bei der Zirkulation vorher den Kalkschutzbehälter mit Kalkschutzgranulat durchflossen, wodurch die Standzeit des Filtermoduls erhöht wird. Denn der Anteil der Kalkablagerungen in der Leitungsanordnung und insbesondere in der Ultrafitrationseinheit wird dadurch verringert. Andererseits fließt das durch die Ultrafiltrationseinheit gefilterte Trinkwasser durch den Kalkschutzbehälter, wodurch Ablagerungen von Mikroorganismen auf den Granulatoberflächen im Kalkschutzbehälter verringert oder vermieden wird.

Unter einer Ultrafiltrationseinheit wird im Rahmen dieser Beschreibung eine Filteranordnung verstanden, die mechanisch arbeitet, also beispielsweise mittels Poren, durch welche nur die Flüssigkeit hindurchtreten kann, die unerwünschten Mikroorganismen jedoch nicht. Wenngleich der Wortbestandteil "Ultra" typischerweise auf eine Abtrennung von Partikeln der Größe 0,1 bis 0,01 µm hindeutet (darunter wird oft von Nanofiltration, darüber von Mikrofiltration gesprochen), ist der konkrete Filtertyp und dessen Abscheidungsgrad von der jeweiligen Aufgabenstellung abhängig und kann durchaus auch die angrenzenden Gebiete der Filtration umfassen oder auf ihnen liegen. Die Porengröße beträgt bevorzugt 0,02 µm. Ultrafiltrationssysteme sind somit sowohl zum Entfernen genannter Mikroorganismen als auch anderer Schweb- und Trübstoffe geeignet.

Der Kalkschutzbehälter ist bevorzugt mit Granulat befüllt, durch das das Trinkwasser zum Enthärten zumindest teilweise durchgeleitet wird. Das Granulat besteht beispielsweise aus Polymeren oder aus keramischen Materialien.

In bevorzugter Weise ist die Pumpe in dem Leitungsabschnitt in Strömungsrichtung vor dem Kalkschutzbehälter angeordnet und insbesondere sind die Ultrafiltrationseinheit und der Kalkschutzbehälter in dem Leitungsabschnitt zwischen der Einlassleitung und der Auslassleitung angeordnet.

Somit wird sichergestellt, dass das Wasser in dem Rohrleitungsabschnitt zwischen der Einlassleitung und der Auslassleitung und in der Bypassleitung nicht über eine längere Zeit stagniert, da die Pumpe zumindest phasenweise, vorzugsweise dauerhaft und unabhängig von der Wasserentnahme aus der Leitungsanordnung für eine Durchströmung sorgt. In Zeiten hoher Wasserentnahme fließt das Wasser ausgehend von der Einlassleitung sowohl über den Leitungsabschnitt als auch durch die Bypassleitung zur Auslassleitung.

Daher müssen die Ultrafiltrationseinheit und der Kalkschutzbehälter nicht auf den Spitzenbedarf der höchsten Wasserentnahme ausgelegt werden, da das Wasser auch über die Bypassleitung zum Leitungsbereich einer Trinkwasserinstallation jenseits der Auslassleitung fließen kann.

In bevorzugter Weise ist ein Speicherbehälter in dem Leitungsabschnitt oder in der Bypassleitung angeordnet. Der Speicherbehälter dient als Speicher für hygienisch einwandfreies und kalkstabilisiertes Wasser für Zeiten mit Spitzenbedarf. Dadurch wird die Kapazität der Leitungsanordnung vergrößert.

In einer alternativen bevorzugten Ausgestaltung der Leitungsanordnung sind die Ultrafiltrationseinheit und die Pumpe in der Bypassleitung und der Kalkschutzbehälter in dem Leitungsabschnitt zwischen der Einlassleitung und der Auslassleitung angeordnet.

Bei dieser bevorzugten Bauweise, die insbesondere auf eine ausreichende Entfernung der Kalziumionen bzw. die Kalkstabilisierung abzielt, kann das zu behandelnde Trinkwasser, das aus einer Einlassleitung in eine Wasser führende Trinkwasserinstallation jenseits der Auslassleitung gelangen soll, zuerst durch den zwischen der Einlassleitung und der Auslassleitung angeordneten Leitungsabschnitt geführt werden, in dem der Kalkschutzbehälter mit Kalkschutzgranulat im Wasserstrom angeordnet ist. Weiterhin sind die Pumpe und die Ultrafiltrationseinheit in der Bypassleitung angeordnet.

Somit kann das Trinkwasser, welches in die Leitungsanordnung fließt, den Kalkschutzbehälter mit Kalkschutzgranulat durchfließen, ohne zuvor durch die Ultrafiltrationseinheit geleitet zu werden. Daher können hohe Wasserströme durchgeleitet werden, ohne dass es durch die Ultrafiltrationseinheit zu einem großen Druckabfall kommt. Daher muss nur der Kalkschutzbehälter, nicht jedoch die Ultrafiltrationseinheit, auf den Spitzenbedarf der höchsten Wasserentnahme ausgelegt werden.

In einem Zeitraum, in dem wenig oder kein Trinkwasser aus der Auslassleitung entnommen wird, erzeugt die Pumpe wieder eine Zirkulation innerhalb der Leitungsanordnung, so dass nacheinander das Trinkwasser durch die Ultrafiltrationseinheit und den Kalkschutzbehälter fließt.

In bevorzugter Weise ist ein Speicherbehälter in dem Leitungsabschnitt oder in der Bypassleitung angeordnet. Der Speicherbehälter dient als Speicher für hygienisch einwandfreies und kalkstabilisiertes Wasser für Zeiten mit Spitzenbedarf. Dadurch wird die Kapazität der Leitungsanordnung vergrößert.

Im Folgenden wird die Erfindung anhand von Ausführungsbeispielen mit Bezug auf die Zeichnung erläutert. In der Zeichnung zeigen
- Fig. 1: ein erstes Ausführungsbeispiel einer erfindungsgemäßen Leitungsanordnung in einer schematischen Darstellung und
- Fig. 2: ein zweites Ausführungsbeispiel einer erfindungsgemäßen Leitungsanordnung in einer schematischen Darstellung.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

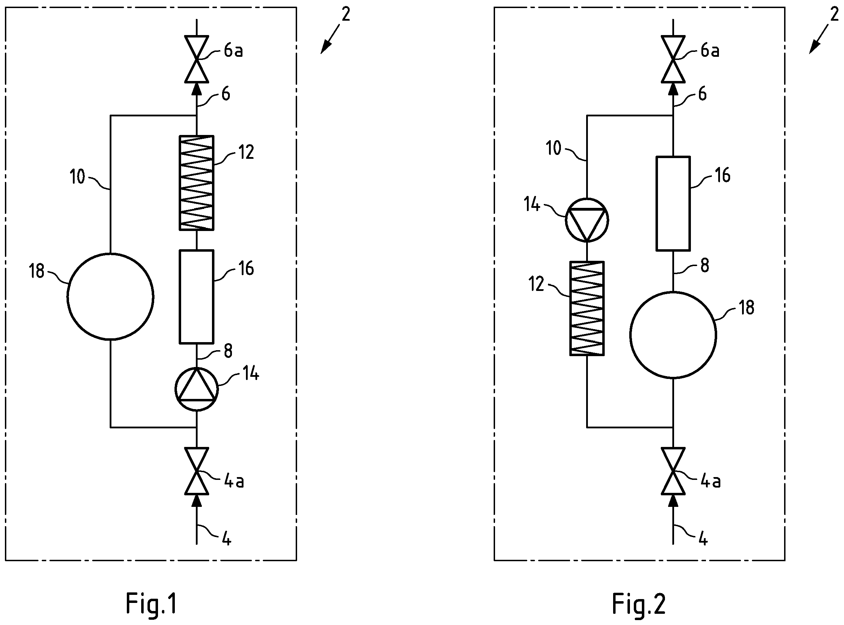

Fig. 1 ist eine Leitungsanordnung 2 zur Vorbehandlung von Trinkwasser dargestellt, die eine Einlassleitung 4 mit Einlassventil 4a und eine Auslassleitung 6 mit Auslassventil 6a aufweist, zwischen denen ein Leitungsabschnitt 8 ausgebildet ist. Zudem ist eine Bypassleitung 10 vorgesehen, die von dem Leitungsabschnitt 8 einerseits nahe dem Einlassventil 4a und andererseits nahe dem Auslassventil 6a abgeht.

Die Leitungsanordnung weist weiterhin eine Ultrafiltrationseinheit 12 und eine Pumpe 14 auf. Durch den Betrieb der Pumpe 14 ist es möglich, einen Wasserstrom durch die Ultrafiltrationseinheit 12 strömen zu lassen.

Des Weiteren ist ein Kalkschutzbehälter 16 zur Aufnahme von Kalkschutzgranulat vorgesehen. Als Granulat kann dabei Polymeren oder aus keramischen Materialien. eingesetzt werden. Der Kalkschutzbehälter 16 ist in Strömungsrichtung in dem Leitungsabschnitt 8 vor der Ultrafiltrationseinheit 12 angeordnet und die Pumpe 14 ist für ein Erzeugen eines Wasserstroms durch die Ultrafiltrationseinheit 12 und den Kalkschutzbehälter 16 hindurch vorgesehen. Somit sind die Ultrafiltrationseinheit 12 und der Kalkschutzbehälter 16 gemeinsam in dem Leitungsabschnitt 8 in Reihe angeordnet.

Des weiteren ist ein Speicherbehälter 18 in der Bypassleitung 10 angeordnet, der zum Speichern einer Vorratsmenge an gesäubertem Wasser dient und dann, wenn ein Bedarf besteht und Trinkwasser aus dem Auslassventil abgelassen wird, eine größere Menge an gereinigtem Wasser zur Verfügung stellen kann. Denn bei einem erhöhten Bedarf an Trinkwasser kann der Leitungsabschnitt 8 den Bedarf wegen des hohen Strömungswiderstandes der Ultrafiltrationseinheit 12 nicht decken. In dieser Situation fließt frisches Trinkwasser über das Einlassventil 4a in die Leitungsanordnung 2 und insbesondere in den Speicherbehälter 18 nach.

Dann, wenn kein oder nur wenig Trinkwasser aus der Leitungsanordnung 2 durch das Auslassventil 6a fließt, befindet sich die Leitungsanordnung 2 im Zirkulationsbetrieb. Dabei wird durch die Pumpe 14 das Trinkwasser durch den Leitungsabschnitt 8 und die Bypassleitung 10 gepumpt, so dass eine fortlaufende Entkalkung in dem Kalkschutzbehälter 16 und eine fortlaufende Reinigung in der Ultrafiltrationseinheit 12 erfolgt. Alternativ kann die Pumpe 14 auch alternierend ein- und ausgeschaltet werden, so dass alternierend eine Reinigung und Enthärtung stattfindet. Einerseits fließt das in der Ultrafiltrationseinheit 12 gefilterte Trinkwasser aufgrund der Zirkulation durch den Kalkschutzbehälter 16, so dass das Granulat im Kalkschutzbehälter 16 vor einer Verunreinigung durch Mikroorganismen weitgehen geschützt ist. Andererseits fließt das im Kalkschutzbehälter enthärtete Trinkwasser aufgrund der Zirkulation durch die Ultrafiltrationseinheit, so dass Kalkablagerungen in dem Ultrafiltermaterial vermieden oder zumindest verringert wird.

Fig. 2 zeigt ein weiteres Ausführungsbeispiel einer erfindungsgemäßen Leitungsanordnung 2, die ähnlich wie in Fig. 1 ausgebildet ist. Daher werden nachfolgend nur die Unterschiede aufgezeigt.

Der Kalkschutzbehälter 16 ist weiterhin in dem Leitungsabschnitt 8 angeordnet, die Ultrafiltrationseinheit 12 und die Pumpe 14 sind dagegen in der Bypassleitung 10 angeordnet. Des Weiteren ist der Speicherbehälter 18 in dem Leitungsabschnitt 8 angeordnet.

Dann, wenn Trinkwasser aus dem Auslassventil 6a abgeleitet wird, erfolgt die hauptsächliche Strömung durch den Leitungsabschnitt 8 durch den Speicherbehälter 18 und den Kalkschutzbehälter 16 hindurch. Dann, wenn kein oder nur wenig Trinkwasser aus dem Auslassventil 6a fließt, befindet sich die Leitungsanordnung 2 im Zirkulationsbetrieb und die Pumpe 14 befördert Trinkwasser in der Bypassleitung 10 durch die Ultrafiltrationsleitung 12 hindurch, das anschließend durch den Leitungsabschnitt 8 mit dem Speicherbehälter 18 und dem Kalkschutzbehälter 16 fließt.

Somit gelangt bei beiden Leitungsanordnungen 2 nach den Fig. 1 und 2 einerseits entkalktes Wasser aus dem Kalkschutzbehälter 16 durch die Ultrafiltrationseinheit 12, so dass die Ultrafiltrationseinheit 12 vor einem Verstopfen durch eine Kalkablagerung geschützt ist. Und andererseits fließt gereinigtes Trinkwasser aus der Ultrafiltrationseinheit 12 durch den Kalkschutzbehälter 16, so dass das Granulat im Kalkschutzbehälter 18 vor einer Verunreinigung durch Mikroorganismen geschützt ist.

## Patentansprüche

1. Leitungsanordnung zur Vorbehandlung von Trinkwasser,
- mit einer Einlassleitung (4) und einer Auslassleitung (6),
- mit einem zwischen der Einlassleitung (4) und der Auslassleitung (6) angeordneten Leitungsabschnitt (8),
- mit einer Bypassleitung (10),
- mit einer Ultrafiltrationseinheit (12) und
- mit einer Pumpe (14),
**dadurch gekennzeichnet,**
- **dass** ein Kalkschutzbehälter (16) zur Aufnahme von Kalkschutzgranulat vorgesehen ist,
- **dass** der Kalkschutzbehälter (16) in Strömungsrichtung vor der Ultrafiltrationseinheit (12) angeordnet ist und
- **dass** die Pumpe (14) für ein Erzeugen eines Wasserstroms durch die Ultrafiltrationseinheit (12) und den Kalkschutzbehälter (16) hindurch vorgesehen ist.

2. Leitungsanordnung nach Anspruch 1,
**dadurch gekennzeichnet,**
**dass** die Pumpe (14) in dem Leitungsabschnitt (8) in Strömungsrichtung vor dem Kalkschutzbehälter (16) angeordnet ist.

3. Leitungsanordnung nach Anspruch 1 oder 2,
**dadurch gekennzeichnet,**
**dass** die Ultrafiltrationseinheit (12) und der Kalkschutzbehälter (16) in dem Leitungsabschnitt (8) angeordnet sind.

4. Leitungsanordnung nach Anspruch 1,
**dadurch gekennzeichnet,**
**dass** die Ultrafiltrationseinheit (12) und die Pumpe (14) in der Bypassleitung (10) und der Kalkschutzbehälter (16) in dem Leitungsabschnitt (8) angeordnet sind.

5. Leitungsanordnung nach einem der Ansprüche 1 bis 4,
**dadurch gekennzeichnet,**
**dass** ein Speicherbehälter (18) in dem Leitungsabschnitt (8) oder in der Bypassleitung (10) angeordnet ist.
